# EUROPEAN PATENT SPECIFICATION

(11) **EP 1 570 693 B1**
(45) Date of publication and mention of the grant of the patent: **11.01.2012**
(21) Application number: 03797779.0
(22) Date of filing: 16.09.2003
(51) Int. Cl.: H04W 4/22

(54) **ALARM ARRANGEMENT AT A MOBILE COMMUNICATION SYSTEM**
ALARMANORDNUNG IN EINEM MOBILKOMMUNIKATIONSSYSTEM
DISPOSITIF D'ALARME POUR SYSTEME DE COMMUNICATION MOBILE

(30) Priority: 17.09.2002 SE 0202771
(43) Date of publication of application: 07.09.2005
(73) Proprietor: Multicom Security AB, 117 43 Stockholm (SE)
(72) Inventor: LANGSTRÖM, Mikael, S-903 52 Umea (SE); ERIKSSON, Göran, S-167 66 Bromma (SE)
(74) Representative: Glawe, Delfs, Moll
(86) International application number: PCT/SE2003/001460
(87) International publication number: WO 2004/028184

(56) References cited:
- WO-A1-02/09465
- US-A- 5 416 468

## Description

The present invention relates to a mobile telephone system. Said system can use any type of mobile network whatsoever. GSM is one example of such a network. A mobile terminal can be used in, for example, the transport of valuables, the transport of other goods, or in any other situation where danger may arise. In such situations, an attacker can easily jam, alter, record, retransmit or in some other way manipulate signals transmitted from mobile terminals. This is a serious problem.

Document WO 02 09465 A1 discloses an alarm arrangement at a mobile telephone system having a switching centre and a number of mobile telephone units or other units having similar capabilities which transmit signals. The disclosed technique is continuously sending signals to an alarm central.

The purpose of the invention is that it should remedy said problem in the situations given above. To do this, the invention has each and every critical mobile terminal in a system (i.e. terminals that should be monitored by signal transmission/reception) transmit/receive signals regularly, randomly or when triggered by an event. These signals can be adapted so that they contain various sorts of information. The sort of information contained can also be varied. Thus, a mobile terminal can be connected to, for example, a GPS and said signals can contain position information. Said signals would be encrypted in the system and would have to be decrypted when received.

The mobile terminals transmit signals/messages to the system's switching center. This center logs events such as received and transmitted signals. It also analyses signals and the situation. The resultant information is then, dependent on the programmed logic, forwarded to an alarm reception center and, where appropriate, to any customer who, in respect of use other than alarm reception, is in charge of the individual mobile terminal. The system comprises a first device at a mobile terminal, a second device that functions as the system's switching center, a third device (or system interface) at an alarm reception center and, where appropriate, a fourth device (or system interface) located on the customer's premises.

The objects of the invention are achieved by a mobile communication system characterized by what is stated in the independent claim. The preferred embodiments of the invention are disclosed in the dependent claims.

Thus, a system configured as per the present invention comprises one or more mobile terminals (receivers/transmitters) that transmit/receive messages whether or not the terminals are in active use. The system's terminals can also be conveniently set up to receive position details from a positioning system, e.g. GPS. In this way, the signals/messages transmitted from the mobile terminals (or other units with equivalent properties) can contain position details and information on each mobile terminal's system membership.

Using known equipment, such signals can, with no great problems, be jammed. Should this happen, the signal reception equipment in the system's central unit triggers a message (e.g. an alarm) that is transmitted to a defined receiving unit (e.g. an alarm reception center) so that appropriate action can then be taken. As signals/messages are sent regularly, randomly and when triggered by an event, the alarm reception center has information on the latest status and position of mobile terminals.
So that the signals cannot be tapped or manipulated, the messages are encrypted and given a so-called digital signature. Each signal/message is time-stamped, first in the terminal and then in the system's switching center. Time stamping in the switching center takes place after reception from the terminal and on reception of any message acknowledgements from the alarm reception center.

To ensure the maximum possible availability when transmitting signals/messages, the system can exploit the possibility of transmitting information in various ways. For example, when transmitting over a GSM/GPRS network: packet transmission (IP/GPRS), circuit switching (IP/CSD) and short messages (SMS or USSD) can all be used.

In the event that terminals can also be connected to wired connections (for example, a fixed IP connection), terminals can also transmit signals/messages via such connections.

To avoid the generation of erroneous connection alarms when, due to known technical reasons, signals/messages are missing, verification processes and logic checks are used before a connection alarm is issued.

The system thus has functions for:
- Sensitivity adjustment in respect of the number of missing signals/messages.
- Comparison of status with the signals/messages of other mobile terminals within defined geographic areas.
- Comparison with deployed reference transmitters.

To be able to give information that is as up-to-date as possible when, for example, there is an alarm, the system also has a function that automatically transmits the last position at the time there is an interruption in signal/data code from the GPS satellites. As, in principle, a GPS receiver requires free sight of the satellites it retrieves data code from, it cannot receive data in, for example, tunnels, garages, streets bordered by high buildings, etc. The signals used in mobile land networks such as GSM are more penetrating and, consequently, GSM radio receivers/transmitters can, in many cases, still function a while after GPS receivers have lost contact with their satellites. Furthermore, an increasing number of public facilities such as garages, large tunnels, etc. are being equipped with antennas/radiating cables for good GSM reception, even under ground.

In the present system, the GPS receiver has been connected to the mobile terminal/transmitter and equipped with a logic that, immediately when satellite contact is lost, initiates automatic transmission to the system's switching center of the latest position/coordinates calculated by the GPS receiver. This solution also entails that, in certain cases, transmissions can be limited to the instances where the GPS receivers have lost contact with their satellites. The function exploits the fact that the signals used by land mobile transmitters/receivers are more penetrating than the signals from GPS satellites. At the same time, it optimizes transmission and central logging of positions when GPS contact is lost.

As no system can position a terminal that is not working because of, for example, mechanical sabotage or interference from jamming equipment, the system has a logbook built into the system's switching center. The position log solves the problem by regularly (e.g. once a minute) storing the historical coordinates in a log of positions and any other additional information registered in the past 24 hours.

The system's switching center thus receives regular updates (e.g. one a minute) on the positions of the monitored terminals and enters this information in the log. The process runs continuously. Consequently, the logbook always contains position indications relating to, for example, every minute of the past twenty-four hours.

When a call to a terminal receives no response, or the monitoring system in some other way detects that the terminal is no longer "live", the log containing the terminal's last recorded position, and the positions up to that point, is used. In this way, the system creates a trail to an area where the terminal is most probably located or, at least, was located when contact was lost.

The position log can also be updated by a trigger from the terminal, e.g. the activation of a button on the terminal. The position is then transmitted as a time-stamped message from the terminal to the system's switching center. This message updates the log with position and information on the triggering. Other supplementary information, e.g. a recorded message, can also be added to the message. Where there is a time-triggered alarm, this stored information can later be used as information for the alarm center.

Because system terminals send time and position containing messages to the system's switching center regularly, randomly or as triggered by events, a terminal's last reported position can still be presented after a break between a system terminal and the switching center:
- In the event of an alarm - the position at the time of the alarm.
- The latest received position.
- The latest calculated position before GPS satellite contact was lost.
- A log of the latest registered positions, e.g. every XX seconds, XX days back in time.

It must be possible for the information from terminals to be securely recognized by the system's switching center and protected from unauthorized tapping or interference. The system terminal's regularly transmitted signals/messages containing terminal identity, time stamp and attached GPS coordinates are thus encrypted and electronically signed.

Other transmitted data, e.g. alarm information, status messages, pictures etc., can also be protected and identified in the same way.

Besides an algorithm, a key pair is also used for each contact between terminal and system switching center. A special process generates the key pair in the terminal. From the terminal to the system's switching center, the pair is transmitted via a special key exchange message. This message is asymmetrically encrypted with a "public" key that is stored in the terminal or in the terminal's SIM card. Using the switching center's "public" key (stored in the terminal or on the SIM card), the terminal can then encrypt the message, which subsequently goes to the system's switching center. The system's switching center uses its secret key to decrypt the message and reads the transmitted key. The transmitted key can then be used for symmetrical encryption (e.g. AES encryption) of alarms, position messages, etc.

The switching center's "public" key, which is stored in the terminal (3) or the terminal's SIM card, can be entered using a special process during terminal manufacture. The secret key is entered as a protected data record in the system's switching center. This is the basic principle that is repeated in the system so that a number (e.g. XX) of "public" server keys are entered in each terminal while, at the same time, XX private (secret reserve keys) keys are entered in the system's switching center. The idea behind the reserve keys is that keys which are being used can be replaced/withdrawn if it is suspected that, for example, there is a danger of unauthorized system access. The central control system's secret reserve keys are thus to be stored in a separate, protected place, e.g. on a CD in a bank vault.

The algorithm used for encryption can be exchanged by downloading from switching center to terminal. As open code is used in the algorithm, this procedure does not involve any exposure to risk - only the keys need to be protected.

The reserve key solution is built in to ensure that, as far as is possible, no total recall of terminals will be necessary due to human factors/negligence or fraud.

Other characteristics of the present invention are revealed in the following patent claim.

In the following, the present invention is described with the aid of an example configuration that is depicted in a number of figures.
- Figure 1: shows a known, complete communication system including a known mobile telephone system.
- Figure 2: shows how the complete communication system shown in figure 1 is adapted to realize the invention.
- Figure 3: shows how a certain problem arises and how it is solved by the invention.
- Figure 4: shows how a monitored mobile terminal is adapted to realize the invention.
- Figure 5: is a schematic of how the system's switching center is configured to realize the invention.
- Figure 6: is a schematic of how, to realize the invention, a part of the logbook is created (through regular, random and/or event-triggered reporting of positions) in the system's switching center.
- Figure 7: is a schematic of how, to realize the invention, the logic for monitoring and connection alarms is configured in the system's switching center.
- Figure 8: shows the flow of monitoring signals.
- Figure 9: shows a monitoring message (UDP).

With the aid of seven drawings, a configuration is now described.

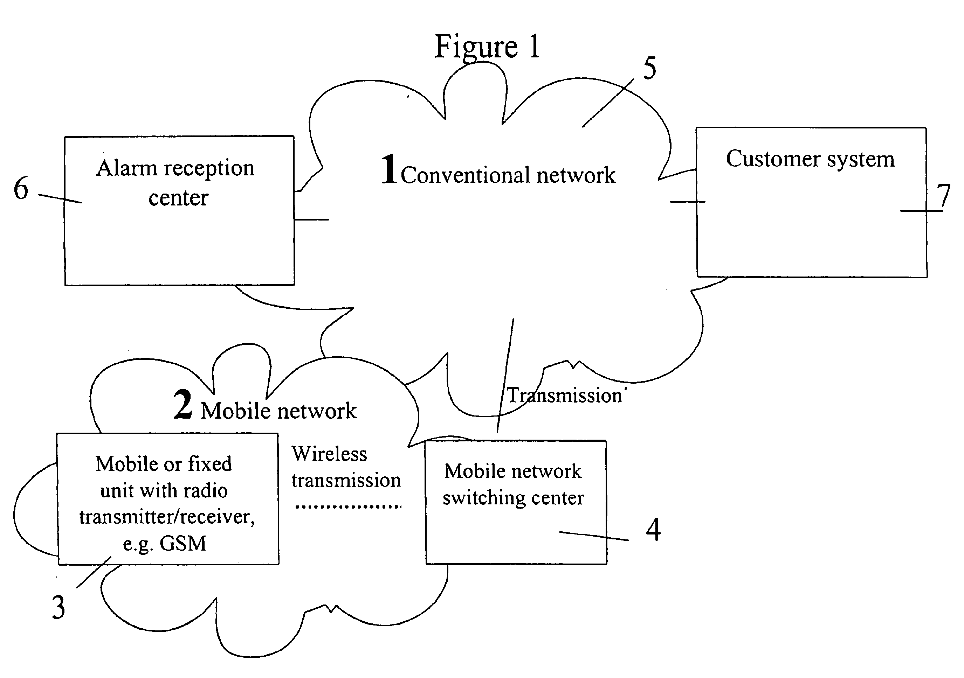

Figure 1 shows a complete communication system comprising alarm reception and customer systems in a conventional network (1) and mobile terminals and mobile network switching centers in a mobile network (2). This configuration is already known. This known configuration is shown because the invention, as set out in the present application, rests in certain adaptations being made to individual parts of the configuration.

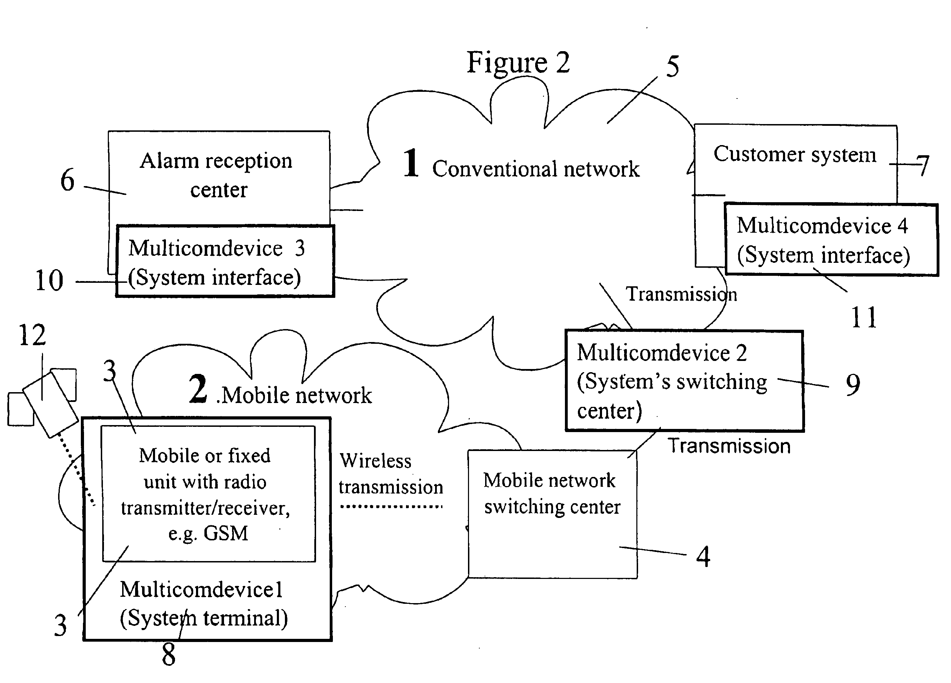

Figure 2 shows the same configuration as figure 1, but with the various changes in the various parts of the configuration depicted so as to give a good overview of the invention. In both figures 1 and 2, unit 3 is a mobile or fixed unit with a radio transmitter/receiver. This unit can be, for example, an automobile, boat or other mobile unit. The unit can also be a stationary unit sited at an appropriate point from which it is desired to transmit and receive mobile data signals. Via a mobile network, unit 3 is in wireless connection with the system's switching center (9). In its turn, the system's switching center is connected to a conventional network (5). To this conventional network are connected an alarm reception unit (6) and a customer system (7). This latter will, in respect of the monitoring of its mobile unit (3), have taken out a contract with the alarm reception unit. The first adaptation made by the invention is that Multicomapparat 1 (designated 8 in figure 2) is so configured in the mobile unit that, when it is not being used for voice/data, the radio transmitter/receiver (e.g. GSM) regularly, randomly, or when triggered by an event, transmits signals/messages of various sorts. Various types of data, e.g. position data from a satellite (12), can be added to these signals/messages. Temperature, current weather conditions etc. in the place from which unit 3 is transmitting and data from equipment (e.g. computers, cameras, microphones, etc.) connected to the unit are other examples of data that can be added to the signals/messages. Said signals are transmitted from the GSM transmitter and received by the system's switching center/Multicomapparat 2 (the latter is designated 9 in figure 2). This device uses logic analysis to forward the received signal, via a conventional network (5), to an alarm reception center (6) equipped with Multicomapparat 3 (designated 10 in figure 2). Multicomapparat 3, which may be a system interface, processes signals received, via unit 9, from unit 3/8 and can display an alarm or other action when the signal from unit 3/8 is lost. The signal from unit 3/8 goes also to any customer unit (7) that wishes to monitor its unit 3/8 as regards, for example, terminal position and any attached data. This customer unit has Multicomapparat 4 (designated 11 in figure 2), which may be a system interface. This device processes the signal from unit 3/8 and extracts the information desired by the customer system (7). Before the signal leaves unit 3/8, the message added to the transmitted GSM signal can be encrypted. The encrypted signal can be decrypted in Multicomapparat 2. It is also possible to reserve decryption until this signal reaches Multicomapparat 3 or 4. The required number of the sort of units here represented by unit 3/8 can be connected to the system's switching center (9). The use of a satellite (12) that transmits positioning signals enables unit 3/8 to always transmit mobile data signals that are conditioned to also include position details. Consequently, Multicomapparat 2 (unit 9) is always aware of the position of unit 3/8 (provided that the signal from this unit has not been blocked). Because the position details from the satellite are continually processed in Multicomapparat 1 and transmitted to Multicomapparat 2, the latest calculated position that has been transferred can, in the event of, for example, a break in the connection between multifunction communication devices 1 and 2, always be found stored in Multicomapparat 2.

Multicomapparat 1 continuously calculates new position details. In the absence of position signals from the satellite (12), the latest calculated position (i.e. that from the moment before the position signals were lost) is automatically transmitted to Multicomapparat 2 (the system's switching center).

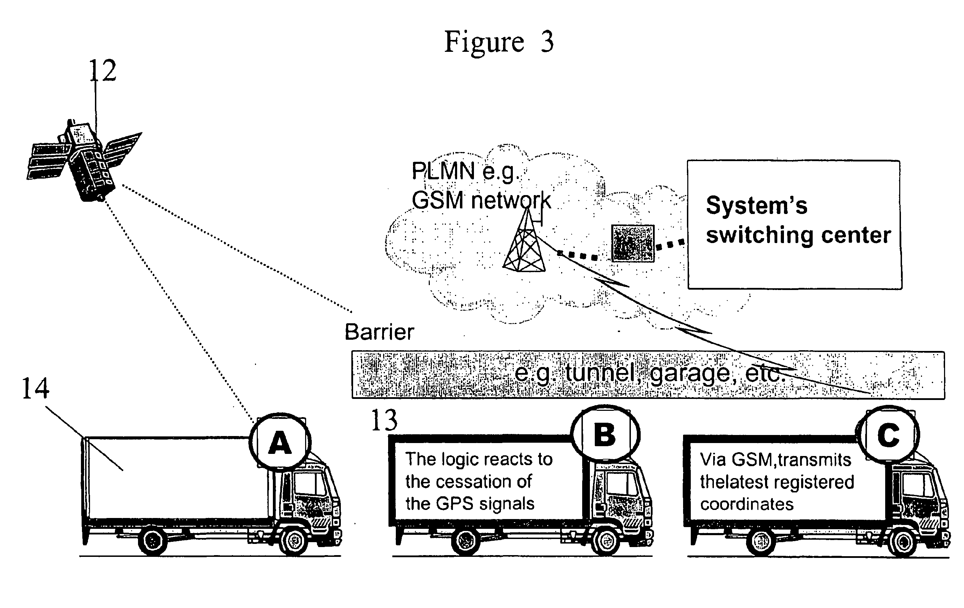

An example of such a situation, i.e. a vehicle (14) passing through a tunnel, is shown in figure 3. In the first position, A, the vehicle receives position details from the satellite (12). In positions B and C the vehicle (14) cannot receive any signals from the satellite (12). Inside the tunnel, there are certain possibilities for Multicomapparat 1 in the vehicle (14) to contact the system's switching center (9) via the mobile network.

In such cases, Multicomapparat 1 immediately transmits, via the radio transmitter, a message to the system's switching center. This message contains time data and the position calculated the moment before entering the tunnel, i.e. the position calculated in the GPS receiver the moment before the signals from the GPS satellites were shielded out. In the system's switching center, the message (containing terminal identity, time, position and any supplementary data) before any break in connection is logged and can be forwarded, either immediately or at a later time, to the alarm reception center or the customer system.

The preceding has described the invention's main features. The following gives details of some of the invention's particular features.

The system's switching center (9), shown in figure 2, is the heart of the monitoring system. This monitors mobile or fixed units, preferably using GSM transmitters/receivers. The system can contain any number of units. These may be named terminals.

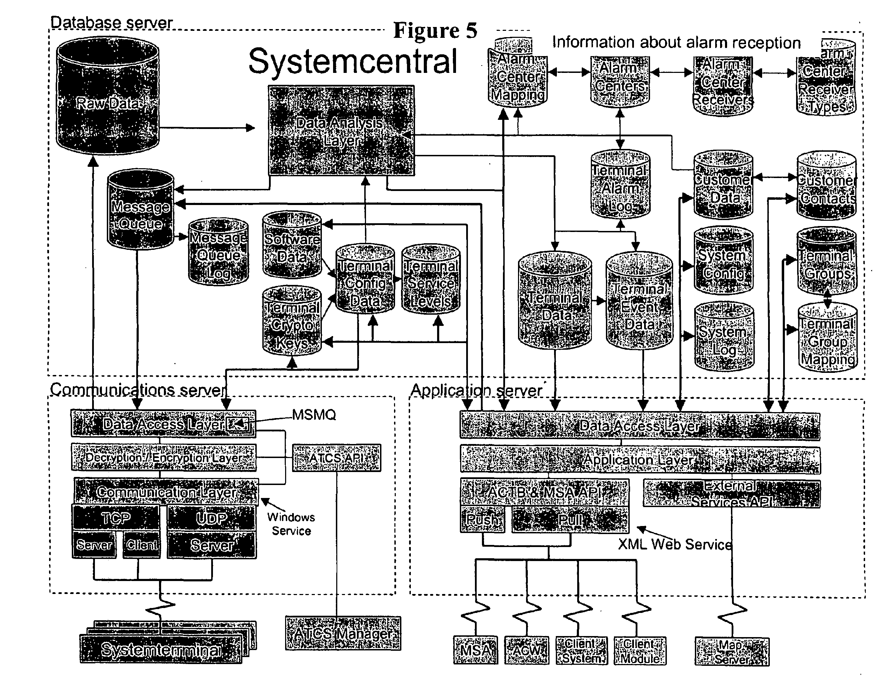

Amongst other functions, the system's switching center controls, monitors and logs communications. The building blocks of the system's switching center are depicted in figure 5.

Terminals are connected to the system's switching center via wire (land) cables and/or wirelessly. Via application interfaces, various corporate systems (e.g. alarm reception, monitoring, traffic control, etc.) are also connected to the system's switching center.

For the monitoring of terminal status, the terminals generate electronically encrypted and electronically signed messages that are transmitted between each terminal and the system's switching center. Signal generation can be regular, event-triggered and/or temporally random. Via the system's switching center, the terminals also communicate (via an application interface) with corporate applications. Dependent on the application, signals/messages can either be logged and processed solely in the system's switching center or also forwarded to the customer application.

Mobile terminals can be positioned using inbuilt GPS receivers or the methods available through mobile networks, e.g. cell position, time advance, etc. The time-stamped position is attached to the information in the encrypted signals/messages.

It is the job of the system's switching center to process communications between terminals and customer applications. This involves, in brief, encryption/decryption, identity checking, the reception and time stamping of the coordinate carrying heartbeat signals and the reception and forwarding of data between terminals and customer applications.

In addition, the system's switching center has to keep a log and, using inbuilt logic, automatically present terminal status to operation monitoring consoles and customer applications.

The system is also administered via its switching center. Terminal parameters (e.g. heartbeat frequency) can be altered and, for updating system software or implementing new service functions, software downloaded.

As open code is used for encryption algorithms, the algorithms can also, if necessary, be exchanged "online/over the air".

Terminal properties and connection to one or more customer systems can be defined and effected directly via a system console or indirectly via an external administrative support system. Each terminal can be connected to several customer systems. One example of this is where a terminal in a vehicle is connected to alarm devices and is monitored by a security company at the same time as other connected equipment communicates with a transport center.

Data traffic can be measured and registered for each terminal and time unit. The information can be transmitted to an independent system that, for example, establishes the charge for the attached traffic.

Actual message frequency can be logged per terminal and can be transmitted to an independent system for the processing of invoicing data.

For communication using a protocol over an encrypted connection, customer systems/customer applications are connected to the system's switching center.

The status of the terminals in the customer's system is shown in the customer's system. In order to make it possible to "see the wood for the trees", even where there is a large number of connected terminals, status information can be filtered by the selection of predefined profiles. Because the terminals systematically send messages containing time and position information to the system's switching center, the position of the terminal can also be presented in the customer application:
- In the event of an alarm - the position at the time of the alarm.
- The latest received position.
- The latest calculated position before GPS satellite contact was lost.
- Position at the start of a timer.
- A log of the latest registered positions, e.g. every XX seconds, XX days back in time.

It must be possible for the system's switching center to securely recognize information from the terminals and also protect it from unauthorized tapping or interference.

Thus, the signals/messages (i.e. each terminal's "regularly," transmitted messages containing terminal identity and time-stamp data as well as attached GPS coordinates) are encrypted and electronically signed.

Other transmitted information (e.g. alarm information, status message, pictures, etc.) is protected and identified in the same way.

The signals/messages that are systematically transmitted to, and monitored in, the system's switching center contain, amongst other things, identity, time stamp and coordinates. The actual load is, in reality, only around X bytes, but the information must be transmitted using a transport protocol. All protocols add overhead to the information that is transmitted. Protocols have various properties and are optimized for their individual, typical applications.

In designing the system, it is important to minimize the basic load from the signals/messages with their appertaining overheads. For this reason, the system uses several transport protocols. Which protocol is used for which events and transmissions is controlled by the system's applications. The switching principle is applied between terminals and switching center. This minimizes data transmissions.

As, amongst other reasons, the system can be based on wireless connection, 100% contact cannot be guaranteed. Operation is dependent on, amongst other things, radio coverage and the load in the network. It is because of this that monitoring via regular, random and/or event-triggered signals/messages is important for critical applications. However, it requires a process for determining how information can be adapted for individual needs. An interruption is not an alarm but a signal that a connection is not currently functioning.
A. When a terminal is activated, it automatically contacts the system's SWITCHING CENTER.
B. The system's SWITCHING CENTER instructs the terminal on heartbeat frequency (e.g. once a minute). This frequency is determined by the terminal's service class.
C. In the system's SWITCHING CENTER, the terminal is allotted "Active-Green" status.
C.1. Status information can also be forwarded to connected customer applications, i.e. the customer's own systems or, for example, an alarm receiver.
C.2. "Active-Green" means that the terminal is switched on and that heartbeat and GPS position are being logged in the system's SWITCHING CENTER.
D. Each terminal is monitored individually through the logging of the frequency-negotiated heartbeat. The absence of a heartbeat may be due to any of a number of technical reasons (e.g. poor radio coverage). However, absence always indicates that the terminal/connection is in some way unreliable at the particular moment of absence. The status thus changes to "Active-Yellow-1".
E. Where service classes have a relatively low heartbeat, messages must be acknowledged. A missed heartbeat then entails that the switching center's acknowledgement to the terminal is also lost. Because of this, the terminal automatically generates a new heartbeat in accordance with its own programmed logic (e.g. after 30 seconds). Parameters can be adjusted "over the air" so that the system can be trimmed for optimum performance.
F. The system's SWITCHING CENTER monitors "Active-Yellow-1" terminals and reciprocally waits X seconds for a new, extra heartbeat. If that heartbeat does not come, the omission is logged and status alters to "Active-Yellow-2".
G. The principles in points D and E repeat continuously and the status in the logbook escalates with each missing heartbeat ("Active-Yellow-3" to "Active-Yellow-4" etc.).
H. When an extra heartbeat is identified, it is registered in the log and the terminal/connection returns to "Active-Green" status.
(NB! On the next occasion that a normal heartbeat is missed, the status once again escalates from "Active-Yellow-1" upwards, i.e. "Active-Green" has zeroed the anomaly counter.)

All events are registered in the logbook and saved for a defined period of time, e.g. a rolling log for the past 30 days.
I. If, however, the heartbeat remains absent and the "Active-Yellow" status reaches a limit value, e.g. corresponding to "Active-Yellow-5", the terminal/connection is allotted a new status ("Break-Red") after the next time interval. This status information is automatically passed to the customer's system in the agreed manner via the agreed interface.

A network fault can cause a large number of terminals to simultaneously lose contact with the system's switching center. For example:
- One or more base stations break down. This stops all traffic in the areas covered by the stations.
- One base station controller or switch breaks down. This stops traffic in a larger region, e.g. southern Sweden.
- The entire network is knocked out by a program error in a core network function.

Provided that the network fault is corrected within the "Active-Yellow" period, no special logic need be activated - the process of individual logging is sufficient to handle the situation.

Similarly, no special logic need be activated if, regardless of the underlying cause, the situation is strictly defined as a "Break". The process of individual logging is then also sufficient to handle this scenario, i.e. "Break-Red" occurs after "Active-Yellow-X".

However, for their priorities, customers, or customers' agents (e.g. security companies), require more information. Thus, a verification process is necessary before status is escalated from "Active-Yellow" to "Break-Red". In this process, information in respect of the total situation in the system's logbook is extracted from the system. If, in this case, a large number (= over X%) of terminals are simultaneously "Active-Yellow", then a more informative status of "Break-Network fault" is allotted. Depending on what information, if any, has been issued by the network operator, further details can then be given via website, email, etc. When the network and, consequently, the heartbeats are once again functioning, the situation is handled by the individual processes and status returns to "Active-Green" as the extra heartbeats are received.

Precision can be increased by more advanced diagnoses where, for example, GPS coordinates are used to identify, for instance, breaks within an area (e.g. a base station cluster) - X% of the connections in the area then simultaneously have "Active-Yellow" status.

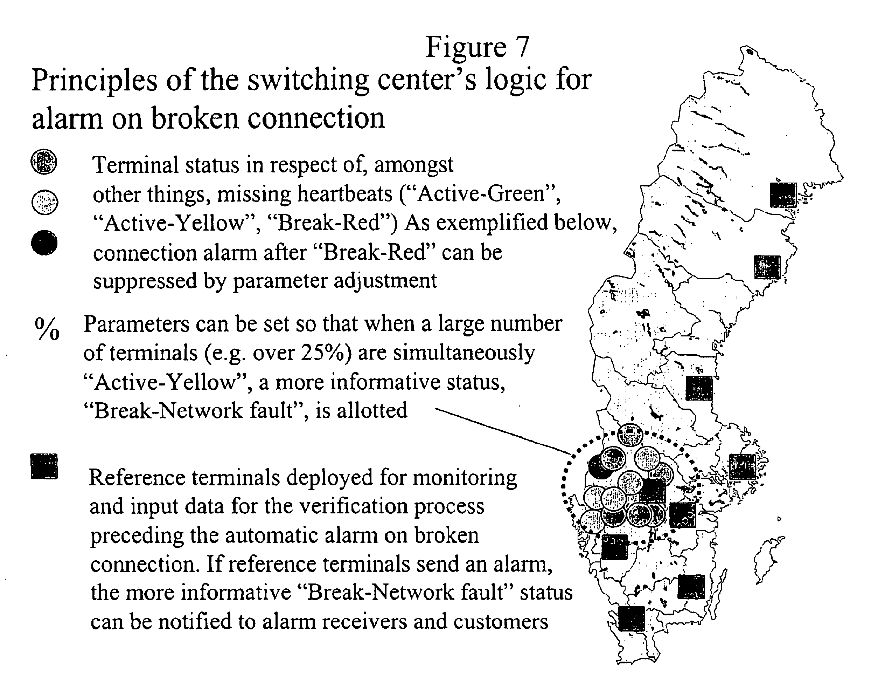

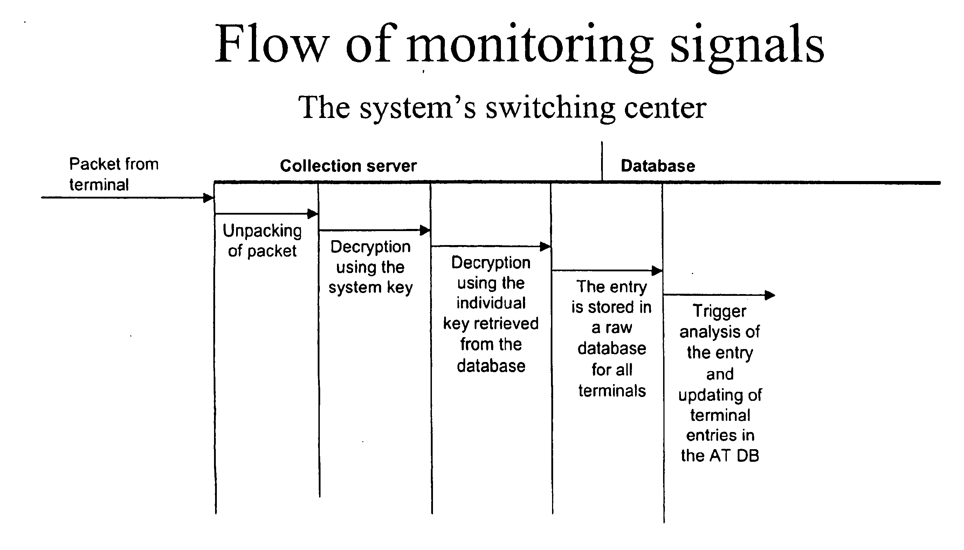

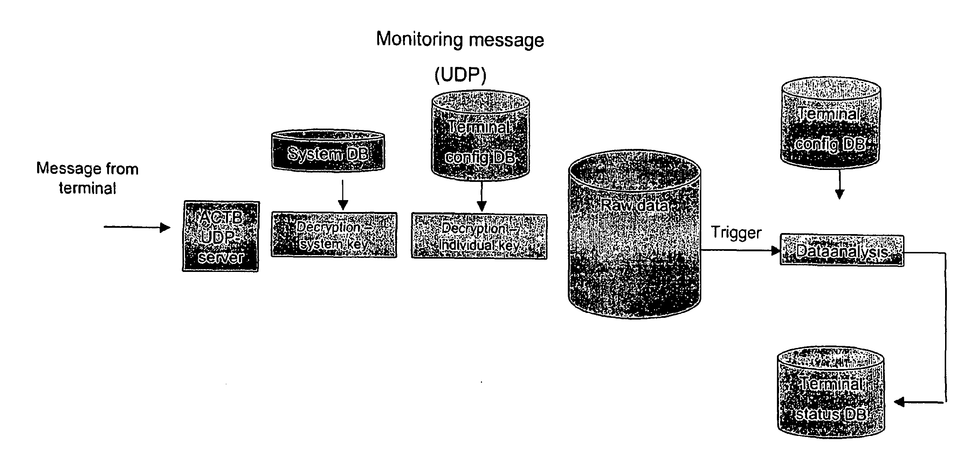

A further method is to compare with reference terminals covering different parts of the network. When reference terminals are also affected by breakdowns or disruptions, this information can also be used in the verification process (see figure 7).

In the scenario where the system's switching center itself ceases, either totally or partially, to function, a pure information process must be initiated to furnish customers with all the details the system can provide at that instant. This is not here a reference to technical solutions for redundancy, but to a function of the central system itself. Nonetheless, due to, amongst other things, human factors or program errors that may possibly strike even in doubled systems, total breakdowns can never be completely ruled out.

An information process such as that referred to immediately above can be effected by, for example, having an entirely separate application retrieve customer ID, connection ID and email addresses from the customer register. The latter, in its turn, is run every evening to check it against the central monitoring system. Using the separate application, emails containing information formulated by operating staff, or picked from a message bank, can then be sent to customers.

To give the most up-to-date information possible in, for example, event of alarm, the system also has a function that automatically transmits the latest position when there is an interruption in signals/data code from satellites in the GPS system. As, in principle, a GPS receiver requires free sight of the satellites it retrieves data code from, it cannot receive data in, for example, tunnels, garages, streets bordered by high buildings, etc. (see figure 3). Land mobile networks such as, for example, GSM, have more penetrating signals. Consequently, in many situations, a GSM receiver/transmitter can still function a while after GPS receivers have lost contact with their satellites. Furthermore, an increasing number of public facilities such as garages, large tunnels, etc. are being equipped with antennas/radiating cables for good GSM reception, even under ground.

In the present system, GPS receivers are connected to the mobile terminals/emitters and have logic that, as soon as contact with the satellites is lost, automatically initiate transmission, to the system's central function, of the last received GPS signals/coordinates.

The above function exploits the fact that the signals used by land mobile transmitters/receivers are more penetrating than the signals from GPS satellites. At the same time, it optimizes transmission and central logging of positions when GPS contact is lost.

As no system can position a terminal that is not working because of, for example, mechanical sabotage or interference from jamming equipment, the system also has a logbook built into the system's switching center. The position log solves the problem by storing the historical coordinates in a log that, for example, registers the positions throughout the past 24 hours.

The system regularly (e.g. once a minute) retrieves coordinates from the positioned and monitored terminals and enters this information in the log. The process runs continuously. Consequently, the logbook always contains position indications relating to, for example, every minute of the past twenty-four hours. The position log can also be updated by triggering-events, e.g. the start of a timer.

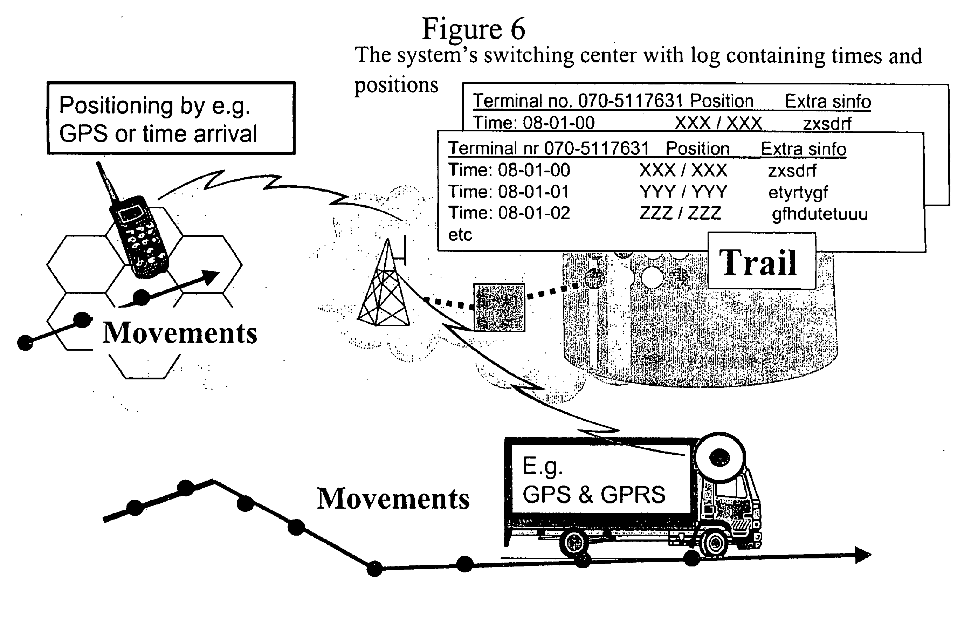

When a call to a terminal receives no response, or the monitoring system in some other way detects that the terminal is no longer "live", the log containing the terminal's last recorded position, and the positions up to that point, is used. In this way, the system creates a trail to an area where the terminal is most probably located or, at least, was located when contact was lost. The principle is shown in figure 6.

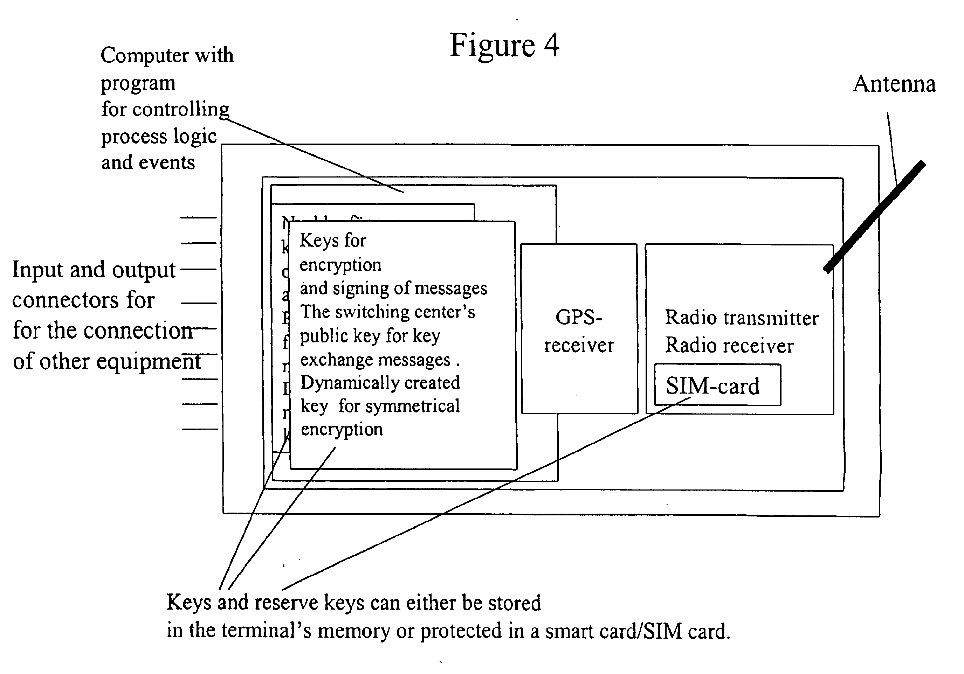

Figure 4 shows the structure of Multicomapparat 1.

## Claims

1. Mobile communication system comprising
a number of mobile telephone units (3) and a switching center (9) connected to a conventional communication network (1) **characterized by**
a first additional device (8) used with each mobile telephone unit (3), said first additional device (8) being adapted to discontinuously transmitting, independently of its mobile unit (3), signals/messages to said switching center,
a second additional device at the switching center adapted to separate out and to process the signals/messages from the first additional device, and
a third additional device (10, 11) at an alarm reception center (6) or a customer unit (7) adapted to further process the signals/messages forwarded by the switching center and to provide information related to said processed signals/messages,
wherein the switching center (9) is adapted to perform a sensitivity adjustment in respect of a number of missing signals/messages.

2. Mobile communication system according to claim 1, wherein the signals/messages comprise position data and the switching center (9) comprises a logbook for storing historical positional data.

3. Mobile communication system according to claim 1 or 2, wherein said switching center (9) is adapted to monitor said number of mobile telephone units (3) and to notify said third additional device (10, 11) about a break mobile network fault status in case signals/messages of a predetermined percentage of said monitored mobile telephone units is missing.

## Patentansprüche

1. Mobilkommunikationssystem mit
einer Anzahl von Mobiltelefoneinheiten (3) und einem Schaltzentrum (9), das mit einem konventionellen Kommunikationsnetzwerk (1) verbunden ist, **gekennzeichnet durch**
eine erste Zusatzvorrichtung (8), die mit jeder Mobiltelefoneinheit (3) verwendet wird, wobei die erste Zusatzvorrichtung (8) ausgebildet ist, um diskontinuierlich, unabhängig von ihrer Mobileinheit (3) Signale/Nachrichten an das Schaltzentrum zu senden,
eine zweite Zusatzvorrichtung im Schaltzentrum, die ausgebildet ist, die Signale/Nachrichten von der ersten Zusatzvorrichtung abzutrennen und zu verarbeiten, und
eine dritte Zusatzvorrichtung (10, 11) in einem Alarmempfangszentrum (6) oder einer Kundeneinheit (7), die ausgebildet ist, um ferner die Signale/Nachrichten, die **durch** das Schaltzentrum übermittelt wurden zu verarbeiten und Informationen bezüglich der verarbeiteten Signale/Nachrichten zu liefern,
wobei das Schaltzentrum (9) ausgebildet ist, eine Empfindlichkeitseinstellung mit Bezug auf eine Anzahl von fehlenden Signalen/Nachrichten durchzuführen.

2. Mobilkommunikationssystem nach Anspruch 1, wobei die Signale/Nachrichten Positionsdaten aufweisen und das Schaltzentrum (9) ein Logbuch zum Speichern historischer Positionsdaten aufweist.

3. Mobilkommunikationssystem nach Anspruch 1 oder 2, wobei das Schaltzentrum (9) ausgebildet ist, die Anzahl der Mobiltelefoneinheiten (3) zu überwachen und die dritte Zusatzvorrichtung (10, 11) über einen Mobilnetzwerkzusammenbruchfehlerstatus in dem Fall mitzuteilen, dass Signale/Nachrichten eines vorgegebenen Prozentsatzes der überwachten Mobiltelefoneinheiten fehlen.

## Revendications

1. Système de communication mobile comprenant :
un nombre donné d'unités téléphoniques mobiles (3) et un centre de commutation (9) raccordé à un réseau de communication classique (1) **caractérisé par** :
un premier dispositif additionnel (8) utilisé avec chaque unité de téléphone mobile (3), ledit premier dispositif additionnel (8) étant adapté afin de transmettre de manière discontinue, indépendamment de son unité mobile (3) des signaux/messages vers ledit centre de commutation,
un deuxième dispositif additionnel au niveau du centre de commutation, adapté afin de séparer et de traiter les signaux/messages provenant du premier dispositif additionnel, et
un troisième dispositif additionnel (10, 11) au niveau d'un centre de réception d'alarme (6) ou d'une unité de client (7) adapté afin de traiter davantage les signaux/messages transmis par le centre de commutation et de fournir des informations associées auxdits signaux/messages traités,
dans lequel le centre de commutation (9) est adapté de manière à exécuter un réglage de sensibilité en fonction d'un nombre de signaux/messages manquants.

2. Système de communication mobile selon la revendication 1, dans lequel les signaux/messages comprennent des données de position et le centre de commutation (9) comprend une liste d'enregistrement afin de stocker un historique de données de position.

3. Système de communication mobile selon la revendication 1 ou 2, dans lequel ledit centre de commutation (9) est adapté afin de surveiller ledit nombre donné d'unités téléphoniques mobiles (3) et de notifier audit troisième dispositif additionnel (10, 11) un état de défaut de réseau mobile interrompu dans le cas où des signaux/messages d'un pourcentage prédéterminé desdites unités téléphoniques mobiles surveillées sont manquants.
